# FASCICULE DE BREVET EUROPEEN

(11) **EP 0 668 493 B1**
(45) Date de publication et mention de la délivrance du brevet: **22.07.1998**
(21) Numéro de dépôt: 95400312.5
(22) Date de dépôt: 15.02.1995
(51) Int. Cl.: G01M 3/38

(54) **Procédé et dispositif de contrôle de nids d'abeilles à l'aide de fibres optiques**
Verfahren und Vorrichtung zur Prüfung von wabenartigen Strukturen mit Hilfe von optischen Fasern
Procedure and device for testing of honeycomb structures using optical fibres

(30) Priorité: 16.02.1994 FR 9401734
(43) Date de publication de la demande: 23.08.1995
(73) Titulaire: SOCIETE SOCHATA ENERGY 1, 75015 Paris (FR)
(72) Inventeur: Bourguinat, Jean Christophe Marcel, F-92190 Meudon (FR)
(74) Mandataire: Berrou, Paul

(56) Documents cités:
- EP-A- 0 448 894
- DE-A- 2 913 918

## Description

### Domaine technique

La présente invention a pour objet un procédé de contrôle du collage ou du brasage d'une structure alvéolaire, telle que celles appelées nids d'abeilles, ou nida, sur un support ainsi que le dispositif de mise en oeuvre dudit procédé.

Dans la suite du texte, on évoquera donc par nida toute sorte de structures alvéolaires quelle que soit la géométrie de l'alvéole. De même, on parlera seulement de collage du nida sur son support sans que cela implique une limitation car le procédé est applicable au contrôle de tout mode de liaison du nida sur le support, qu'il s'agisse de collage, de soudage, de brasage ou d'autres modes de liaison.

L'industrie aéronautique utilise de plus en plus les structures nida, pour leur légèreté et leur résistance à l'écrasement, comme renfort de structure, par exemple pour des carters de turbomachines, ou pour la réalisation de planchers d'avion.

On peut citer ainsi les carters de soufflante des turboréacteurs, à l'extérieur desquels on peut disposer une bande annulaire de nida au droit des aubes fan en remplacement des nervures de renfort antérieures dont l'usinage nécessitait une surépaisseur importante de la pièce brute par rapport à la pièce finie.

Le nida ainsi disposé est une structure particulièrement efficace en renfort à la condition qu'il soit collé (ou brasé selon le mode d'assemblage choisi) sur le fond de la totalité de ses alvéoles. Pour en obtenir l'assurance, on est amené à effectuer un contrôle statistique très serré de ce collage.

Le défaut à détecter étant par exemple un manque de brasure, il se matérialise par un passage entre deux alvéoles voisines.

### Etat de la technique

Actuellement, on dispose de différentes méthodes pour réaliser ces contrôles.

Une première méthode consiste à réaliser un contrôle endoscopique, par un opérateur, des fonds des alvéoles en éclairant violemment une alvéole et en examinant le fond de l'alvéole voisine pour voir si un défaut de collage laisse passer entre l'alvéole éclairée et l'alvéole voisine un rai de lumière.

Cet examen est réalisé de façon statistique en contrôlant la bande de nida sur trois ou quatre points de sa largeur et tous les cinq centimètres sur sa longueur. Ainsi, le contrôle d'une bande de nida de 15cm de largeur placé en renfort sur un carter fan ayant un diamètre de 183 cm nécessite une durée de contrôle qui peut dépasser huit heures avec une fatigue visuelle importante pour l'opérateur et donc une fiabilité du contrôle diminuant avec le temps.

Une deuxième méthode dite par capillarité consiste à plonger le nid d'abeilles dans un liquide fluorescent très mouillant. Les forces de capillarité retiennent le liquide dans les cellules où le nid d'abeilles et sa brasure ne présentent pas de défaut, tandis que les cellules défectueuses ne retiennent pas le fluide.

Les problèmes inhérents à cette méthode sont nombreux.

Tout d'abord, le liquide contient des composés (entre autres du trichloroéthane) dangereux pour un opérateur puisqu'ils sont à la fois inflammables, volatils et toxiques, et le contact avec les vapeurs de ces produits doit donc être soigneusement évité.

Ensuite, le contrôle d'un carter nécessite de plonger celui-ci dans une cuve pour le mouiller, ce qui nécessite des installations volumineuses.

Enfin, l'opération de contrôle elle-même est aussi longue que celle de contrôle endoscopique.

Une troisième méthode, connue par le document EP-A-0 448 894 consiste à appliquer sur une première zone du nida à contrôler une enceinte alimentée en air sous pression et à constater si cet air peut sortir de la zone contrôlée par des défauts de collage. La mesure du débit de fuite permet ainsi aisément de constater l'absence ou la présence de défauts de collage.

Néanmoins, cette méthode convient bien pour des nids d'abeilles assez larges (dimension de maillage supérieure ou égale à 4 mm), mais l'application à des nids d'abeilles plus étroits est, quoique possible, plus délicate de mise en oeuvre. Or, aujourd'hui, on voit couramment des nids d'abeilles dont la dimension de maillage est d'environ 2 mm.

De plus, la mise en oeuvre de cette méthode est bruyante.

Enfin, la mise en oeuvre de cette méthode ne permet pas d'avoir directement un résultat fin et précis : il faut, dans un premier temps, faire une première mesure permettant d'établir un premier diagnostic quant à l'emplacement approximatif d'éventuels défauts ; puis, pour affiner la recherche de localisation de ces défauts, ou pour contrôler les endroits difficilement accessibles, il faut compléter l'opération par une variante du procédé plus particulièrement adaptée au contrôle localisé de petites surfaces.

Ce procédé est donc relativement lourd à mettre en oeuvre.

### Exposé de l'invention

La présente invention a justement pour but de remédier à ces problèmes.

Plus précisément, elle a pour objet un procédé de contrôle de la liaison, sur un support, de nid d'abeilles constitué d'un réseau d'alvéoles parallèles, caractérisé en ce qu'il comporte :
- l'introduction, dans une alvéole du nid d'abeilles, d'une fibre optique, dite fibre d'éclairage, reliée à des moyens d'émission de lumière,
- l'introduction, dans au moins une alvéole adjacente à l'alvéole précédente, d'une fibre optique de mesure reliée à des moyens de conversion de la lumière en un signal électrique,
- l'émission, par l'intermédiaire de la fibre d'éclairage, d'un faisceau d'éclairage de l'alvéole dans laquelle la fibre d'éclairage est introduite,
- la détection synchrone de la lumière, induite par le faisceau d'éclairage précédent dans la ou les alvéoles adjacentes contenant une fibre d'observation.

Ce procédé résout les problèmes posés par les techniques de l'art antérieur, puisque :
- le travail de l'opérateur est largement facilité,
- on évite l'emploi de tout produit nocif ou inflammable,
- le procédé est précis et peut facilement être automatisé et/ou informatisé.

Un autre procédé de contrôle, selon l'invention, de la liaison, sur un support, de nid d'abeilles, constitue d'un réseau d'alvéoles parallèles est caractérisé en ce qu'il comporte :
- le positionnement, au voisinage de l'ouverture d'une alvéole, de l'extrémité d'une fibre optique, dite fibre d'éclairage, reliée à des moyens d'émission de lumière,
- le positionnement, au voisinage de l'ouverture d'au moins une alvéole adjacente à l'alvéole précédente, d'au moins une fibre optique, dite fibre d'observation, de façon telle que son extrémité soit au voisinage de l'alvéole correspondante, chaque fibre d'observation étant reliée à des moyens de conversion d'un signal lumineux en un signal électrique,
- l'émission, par l'intermédiaire de la fibre d'éclairage, d'un faisceau d'éclairage de l'alvéole au voisinage de laquelle la fibre d'éclairage est positionnée,
- la détection synchrone de la lumière induite, par le faisceau d'éclairage précédent, dans la ou les alvéoles adjacentes à l'alvéole au voisinage de laquelle la fibre d'éclairage est positionnée.

Ce deuxième procédé présente les mêmes avantages que le premier par rapport à l'art antérieur.

L'invention a également pour objet un appareil pour la mise en oeuvre d'un des procédés selon l'invention. Cet appareil est caractérisé en ce qu'il comporte un support à travers lequel passent au moins deux fibres optiques, l'une au moins de ces fibres étant reliée à l'une de ses extrémités à des moyens d'émission de lumière, chacune des autres fibres, dite fibre d'observation, étant reliée, à une de ses extrémités, à un moyen de conversion de la lumière en signal électrique, les moyens d'émission et de conversion de la lumière étant situés d'un même côté par rapport au support.

Dans un tel appareil, les extrémités libres des fibres peuvent dépasser du support, du côté opposé à celui où sont situés les moyens d'émission et de conversion de la lumière, d'une distance h, inférieure à la profondeur des alvéoles à mesurer.

Les extrémités libres des fibres peuvent aussi affleurer à la surface du support, du côté opposé à celui où sont situés les moyens d'émission et de réception de la lumière.

Cet appareil possède, par rapport à l'art antérieur, l'avantage de la simplicité et peut être couplé à des moyens permettant l'automatisation des mesures.

Le contrôle du nida peut être effectué par prélèvement, sans avoir à effectuer le contrôle de toutes les mailles, un micro-ordinateur permettant de sélectionner les plages à traiter, et d'analyser les résultats obtenus en utilisant des techniques du type maîtrise statistique des procédés.

### Brève description des dessins

De toute façon, les caractéristiques et avantages de l'invention apparaîtront mieux à la lumière de la description qui va suivre. Cette description porte sur les exemples de réalisations, donnés à titre explicatif et non limitatif. Elle se réfère par ailleurs à des dessins annexés sur lesquels :
- la figure 1 est un schéma qui illustre le principe d'un procédé de contrôle selon l'invention,
- la figure 2 illustre un appareil pour la mise en oeuvre d'un premier procédé selon l'invention,
- la figure 3 est le schéma d'un montage électronique pour un appareil selon l'invention,
- la figure 4 illustre un appareil pour la mise en oeuvre d'un second procédé selon l'invention,
- la figure 5 montre un mode de réalisation automatisée de l'invention.

### Exposé détaillé de l'invention

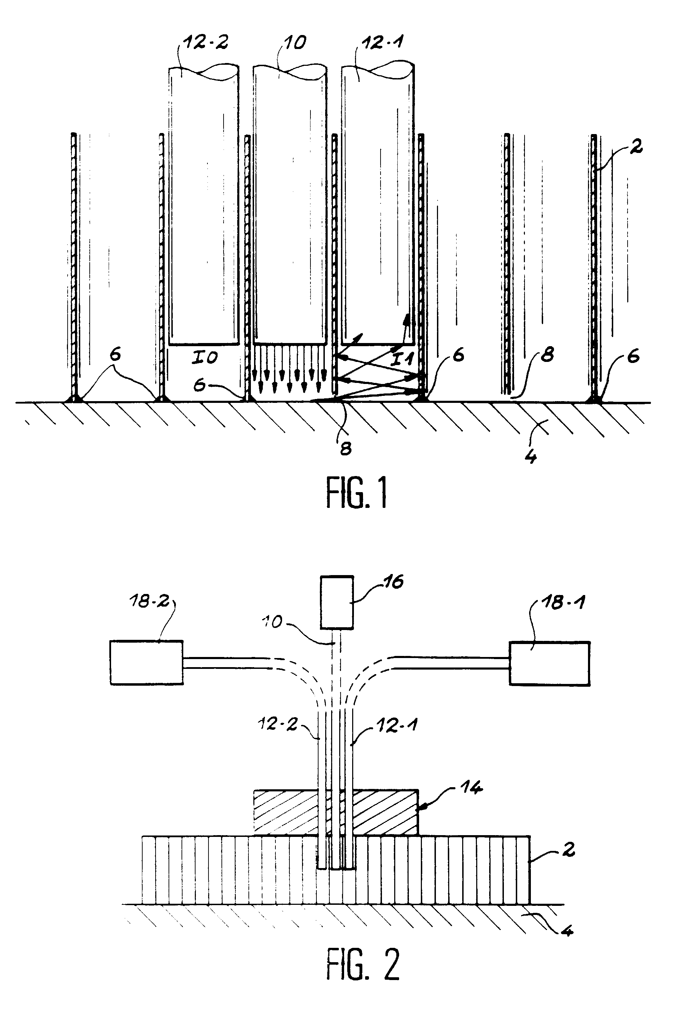

Le principe d'un premier procédé de contrôle, selon l'invention, de la liaison, sur un support, de nids d'abeilles (nida) constitués d'un réseau d'alvéoles parallèles, est illustré sur la figure 1. Sur cette figure, la référence 2 désigne un nid d'abeilles, la référence 4 un support, et la référence 6 une liaison entre le nid d'abeilles 2 et le support 4. Cette liaison 6 peut être un collage, un brasage ou une soudure. L'objectif du procédé selon l'invention est de mettre en évidence la présence de défauts tels que 8 dans la liaison entre le nid d'abeilles et le support. A cette fin, une fibre optique 10, appelée ainsi fibre d'éclairage, reliée à un moyen d'émission de lumière (par exemple une diode non représentée sur la figure) est introduite dans une alvéole du nid d'abeilles 2. Dans au moins une alvéole adjacente à la précédente, on introduit, par exemple suivant une direction parallèle à la première fibre, une fibre optique 12-1 de mesure, ou fibre d'observation, reliée à une de ses extrémités à un moyen de conversion de la lumière en un signal électrique (par exemple une photodiode, également non représentée sur la figure). Si l'alvéole dans laquelle on a introduit la fibre d'éclairage possède n alvéoles immédiatement voisines dans le nid d'abeilles, on peut introduire jusqu'à n fibres d'observation (12-1, 12-2, ..., 12-n) autour de la fibre d'éclairage.

A l'aide du premier moyen d'émission de la lumière relié à la fibre optique d'éclairage 10 (par exemple diode émettrice dans l'infrarouge), un faisceau d'éclairage est envoyé dans l'alvéole dans laquelle la fibre optique d'éclairage est introduite. Dans le cas où il n'y a pas de lacune dans la liaison entre le nid d'abeille et le support, chacune des fibres d'observation va mesurer un signal correspondant à une certaine intensité Iₒ. Dans le cas (celui de la figure 1) où il y a une lacune 8 dans la liaison entre le nid d'abeilles et le support, le faisceau d'éclairage va induire, dans une alvéole adjacente à celle dans laquelle se trouve la fibre d'éclairage, un éclairement d'intensité I₁ supérieure à l'intensité Iₒ mesurée dans le cas précédent.

Dans tous les cas, le signal mesuré peut être analysé dans une unité de traitement appropriée qui permet également d'établir un diagnostic sur l'état de la liaison entre le nid d'abeilles et le support.

Cette mesure peut être répétée par déplacement de l'ensemble constitué par la fibre d'éclairage et la (ou les) fibre(s) d'observation dans les différentes alvéoles du nid d'abeilles. On pourra ainsi obtenir une image précise de l'état de la liaison.

Un appareil pour la mise en oeuvre de ce premier procédé est illustré sur la figure 2 et comporte un support 14 à travers lequel passent au moins deux fibres optiques (une fibre 10 pour l'éclairage dans une alvéole, une fibre 12-1 pour l'observation dans une alvéole voisine). Si la structure géométrique du nid d'abeilles est telle que toute alvéole est immédiatement entourée par n alvéoles voisines, alors on pourra entourer la fibre d'éclairage par un nombre de fibres d'observation compris entre 1 et n (12-1, 12-2, ..., 12-n). La fibre d'éclairage est reliée à une de ses extrémités à un moyen 16 d'émission de la lumière, par exemple une diode électroluminescente pour émettre de la lumière dans l'infrarouge. Chaque fibre d'observation est reliée à un moyen (18-1, 18-2,...) de conversion de la lumière en un signal électrique, par exemple une photodiode. Le moyen 16 d'émission de la lumière dans la fibre d'éclairage 10 et les moyens (18-1, 18-2, ...) de conversion de la lumière en signal électrique, sont tous situés d'un même côté par rapport au support, tandis que, de l'autre côté du support, les extrémités des fibres dépassent, par rapport à celui-ci, d'une certaine distance h, qui n'est d'ailleurs pas nécessairement la même pour toutes les fibres, cette distance étant inférieure à la profondeur p d'une alvéole du nid d'abeilles. Ainsi, pour effectuer une mesure, on peut déposer le support 14 sur le nid d'abeilles 2, émettre de la lumière dans l'alvéole centrale via la fibre d'éclairage 10, observer le niveau de lumière dans les alvéoles adjacentes de façon à déterminer s'il y a ou non présence d'une fuite 8 dans la liaison 6 entre le nid d'abeilles 2 et le substrat 4, et, enfin, déplacer le support 4 et les fibres optiques vers un autre groupe d'alvéoles, afin de poursuivre la reconnaissance des fuites dans la brasure ou la soudure. Ce déplacement pourra se faire soit manuellement, soit automatiquement à l'aide de moyens qui sont décrits plus loin. En outre, des moyens non représentés sur la figure, peuvent être prévus pour maintenir les fibres dans une position fixe par rapport au support 14, ces moyens permettant également de régler la distance h.

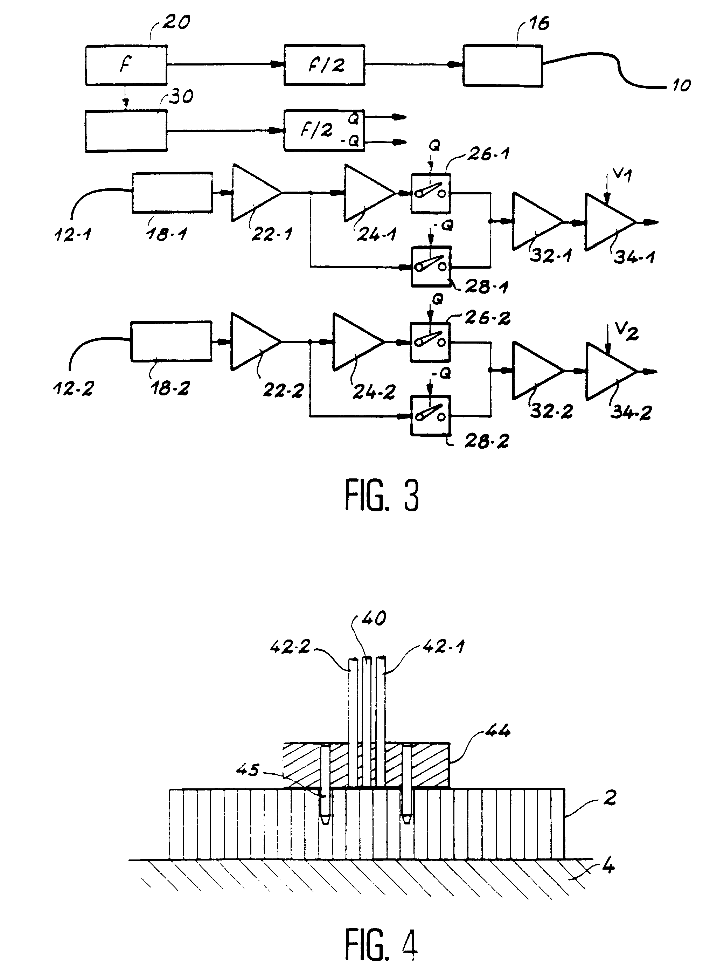

Le principe général du montage électronique utilisé pour la mesure est illustré sur la figure 3 dans le cas de deux fibres d'observation. L'émetteur de lumière 16 par exemple une diode dans l'infrarouge) est modulé en tout ou rien par un oscillateur, à une fréquence f/2. La fibre d'éclairage 10 est reliée directement à cet émetteur de lumière, et fournit donc de la lumière, par exemple infrarouge, modulée, par exemple en carré.

Les moyens (18-1, 18-2,...) de conversion du signal lumineux mesuré en signal électrique (par exemple, photodiodes) fournissent pour chaque fibre d'observation (12-1, 12-2,...), un courant proportionnel au flux lumineux leur parvenant. Ce courant est transformé en une tension par un convertisseur courant-tension (22-1, 22-2,...) qui fournit, par exemple, en sortie 10 V/nA. Cette tension est inversée à l'aide d'un amplificateur (24-1, 24-2,...). A l'aide d'interrupteurs (26-1, 26-2,... ; 28-1, 28-2,...) commandés par un oscillateur local retardé 30, lui-même piloté par l'oscillateur 20, on peut connecter à l'entrée d'un filtre passe-bas (32-1, 32-2,...) soit la tension directe quand la diode est allumée, soit la tension inversée quand la diode est éteinte.

Ce filtre passe-bas effectue la moyenne du signal. On obtient, par ce biais, une suppression du fond continu signal mesuré, ainsi que de toutes perturbations induites par des sources d'éclairage ambiant modulées à 50 ou 100 Hertz, ainsi que de tous les parasites qui peuvent être échantillonnés correctement à la fréquence de l'oscillateur. La sortie du filtre passe-bas attaque un comparateur (34-1, 34-2,...) qui allume une diode électroluminescente en cas de défaut. La référence (V₁, V₂, ...) du comparateur, et ainsi la sensibilité de détection, est ajustable par un potentiomètre.

La sortie du comparateur peut aussi être reliée à des moyens pour mémoriser le résultat de la comparaison et/ou à des moyens pour afficher, par exemple sous forme graphique ou cartographique, ces résultats. Cette chaîne de mesure est utilisée pour chaque fibre d'observation, et ainsi, si on utilise n fibres d'observation (par exemple n=6), on aura n montages électroniques identiques.

Un second procédé de mesure, conforme à l'invention, va maintenant être décrit. Le principe de ce deuxième procédé est le même que dans le cas du premier procédé, mais, cette fois, les fibres ne sont pas plongées dans les alvéoles, mais affleurent à l'entrée de celles-ci. Ainsi, dans un premier temps, on va positionner, au voisinage de l'ouverture d'une alvéole, l'extrémité d'une fibre optique reliée à un moyen d'émission de la lumière (par exemple, diode électroluminescente dans l'infrarouge). Puis, on va positionner, au voisinage de l'ouverture d'au moins une alvéole adjacente à la précédente, l'extrémité libre d'au moins une fibre optique reliée, à son autre extrémité, à un moyen de conversion de la lumière en signal électrique. Par rapport au système précédent, ce procédé possède l'avantage que l'on n'a pas à introduire les fibres optiques dans les alvéoles. Pour le reste, par exemple pour l'émission de la lumière et la détection synchrone, le procédé est identique.

Un appareil pour la mise en oeuvre de ce procédé, illustré sur la figure 4, comporte, comme précédemment, un support 44 porteur de fibres optiques (fibre d'éclairage 40 et fibres de mesure 42-1, 42-2), tel que l'extrémité libre de ces fibres affleure à la surface du support. En outre, ce support peut comprendre des pions de centrage 45 destinés à assurer une position stable de l'ensemble support + fibre optique au cours d'une mesure ainsi que des moyens (non représentés) pour régler la position des fibres et les maintenir dans une position déterminée. Ces pions seront introduits, par exemple, dans des alvéoles voisines des alvéoles dans lesquelles on effectue la mesure.

Des moyens d'émission de lumière reliés à la fibre 40 et des moyens de conversion du signal lumineux en signal électrique, reliés aux fibres 42-1, 42-2,... non représentés sur la figure 4, sont compris dans ce mode de réalisation de l'appareil pour la mise en oeuvre du second procédé.

Le montage électronique utilisé pour la mesure est le même que celui décrit ci-dessus en liaison avec la figure 3.

Une fois toutes les opérations de mesure effectuées dans un groupe d'alvéoles, on soulèvera le support 44 avec les fibres qui lui sont fixées, de façon à pouvoir dégager les pions de centrage et on déplacera l'ensemble jusqu'à une autre position de mesure à la surface du nid d'abeilles. Ce déplacement peut, là encore, être effectué par des moyens automatiques (décrits ultérieurement) ou bien manuellement.

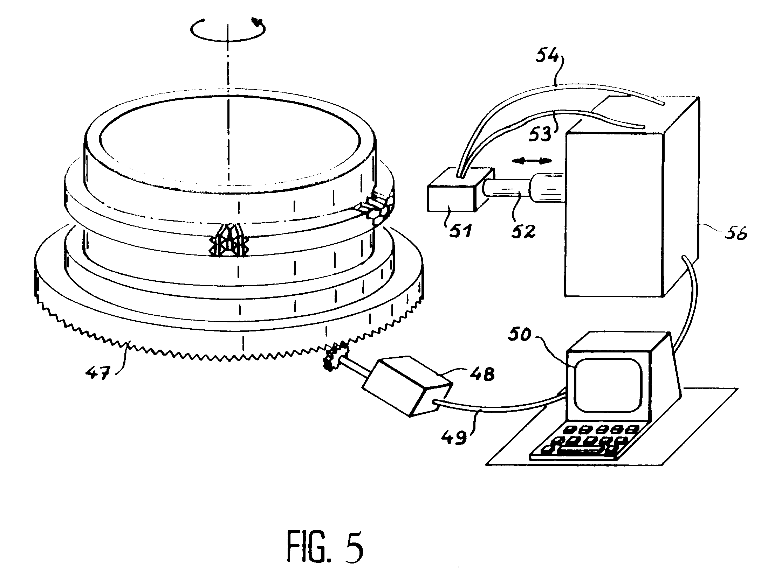

La figure 5 montre un mode de réalisation automatisé de l'invention appliqué ici au contrôle d'une bande de nida appliquée à l'extérieur d'un carter de soufflante de turboréacteur.

La pièce à contrôler est placée, par exemple, sur un plateau tournant 47 muni d'un dispositif de mise en rotation 48 permettant une rotation séquentielle du plateau. Le dispositif 48 comporte une sortie 49 vers une unité d'enregistrement, par exemple un micro-ordinateur 50 qui permettra d'enregistrer le codage angulaire de position de la pièce.

Un boîtier 51 incorpore une des unités de mesure décrites ci-dessus, c'est-à-dire un support (non représenté sur la figure 5) dans lequel sont fixées une fibre optique d'éclairage et une ou plusieurs fibres d'observation : ces fibres sont fixées de façon à ce que leur extrémité dépasse par rapport à la surface du support destiné à être en contact avec le nid d'abeilles à contrôler (premier mode de réalisation de l'invention décrit ci-dessus) ou bien de façon à affleurer à la surface du support pour pouvoir pénétrer dans les alvéoles (deuxième mode de réalisation de l'invention décrit ci-dessus).

Ce boîtier est porté par un bras support 52 disposé radialement par rapport à la pièce et apte à se déplacer selon un mouvement horizontal ou vertical, suivant une, deux ou trois dimensions de l'espace. Ce mouvement est piloté par une unité de commande et/ou par un opérateur via le micro-ordinateur 50 de façon à plaquer à l'endroit voulu le support contre le nid d'abeilles à contrôler.

Sur la figure 5, sont représentées une fibre d'éclairage 53 et une fibre d'observation 54. On peut, évidemment, choisir un autre nombre de fibres d'observation.

Les moyens optiques (diode émettrice et photodiodes) et électroniques associés à chaque fibre d'observation et d'éclairage sont par exemple intégrés dans une armoire 56 qui comprend, en outre, le mécanisme de commande des déplacements du bras.

Le déroulement de l'ensemble de la mesure peut être piloté par le micro-ordinateur 50. Ce dernier peut également comprendre des moyens de mémorisation des données mesurées ainsi que des données spatiales relatives au positionnement du bras et à la position angulaire du plateau tournant, des moyens pour comparer les données mesurées correspondant à l'intensité de la lumière transmise par chaque fibre d'observation à des données étalonnées, des moyens permettant d'inférer à partir des comparaison effectuées, la présence ou l'absence de fuite dans la liaison nid d'abeilles-substrat, et des moyens (par exemple un écran) pour afficher une carte du nid d'abeilles observé et pour indiquer les endroits défectueux.

## Revendications

1. Procédé de contrôle de la liaison, sur un support, de nid d'abeilles constitué d'un réseau d'alvéoles parallèles, caractérisé en ce qu'il comporte :
- l'introduction, dans une alvéole du nid d'abeilles, d'une fibre optique (10), dite fibre d'éclairage, reliée à des moyens (16) d'émission de lumière,
- l'introduction, dans au moins une alvéole adjacente à l'alvéole précédente, d'une fibre optique de mesure (12-1, 12-2, ...) reliée à des moyens (18-1, 18-2,...) de conversion de la lumière en un signal électrique,
- l'émission, par l'intermédiaire de la fibre d'éclairage (10), d'un faisceau d'éclairage de l'alvéole dans laquelle la fibre d'éclairage est introduite,
- la détection synchrone de la lumière, induite par le faisceau d'éclairage précédent dans la ou les alvéoles adjacentes contenant une fibre d'observation.

2. Procédé selon la revendication 1, caractérisé en ce que la lumière du faisceau d'éclairage est une lumière infrarouge émise par une diode.

3. Procédé selon l'une des revendications 1 ou 2, caractérisé en ce que toute fibre optique de mesure est reliée à une photodiode.

4. Procédé de contrôle de la liaison, sur un support, de nid d'abeilles constitué d'un réseau d'alvéoles parallèles, caractérisé en ce qu'il comporte :
- le positionnement, au voisinage de l'ouverture d'une alvéole, de l'extrémité d'une fibre optique (40), cite fibre d'éclairage, reliée à des moyens d'émission de lumière,
- le positionnement, au voisinage de l'ouverture d'au moins une alvéole adjacente à l'alvéole précédente, d'au moins une fibre optique (42-1, 42-2,...), dite fibre d'observation, de façon telle que son extrémité soit au voisinage de l'alvéole correspondante, chaque fibre d'observation étant reliée à des moyens de conversion d'un signal lumineux en un signal électrique,
- l'émission, par l'intermédiaire de la fibre d'éclairage (40), d'un faisceau d'éclairage de l'alvéole au voisinage de laquelle la fibre d'éclairage est positionnée,
- la détection synchrone de la lumière induite, par le faisceau d'éclairage précédent, dans la ou les alvéoles adjacentes à l'alvéole au voisinage de laquelle la fibre d'éclairage est positionnée.

5. Procédé selon la revendication 4, caractérisé en ce que la lumière du faisceau d'éclairage est une lumière infrarouge émise par une diode.

6. Procédé selon l'une des revendications 4 ou 5, caractérisé en ce que chaque fibre optique de mesure est reliée à une photodiode.

7. Appareil pour la mise en oeuvre du procédé selon l'une des revendications précédentes, caractérisé en ce qu'il comporte un support (14, 44) à travers lequel passent au moins deux fibres optiques, l'une au moins de ces fibres (10, 40) étant reliée à l'une de ses extrémités à des moyens (16) d'émission de lumière, chacune des autres fibres (12-1, 12-2,... ; 42-1, 42-2,...), dite fibre d'observation, étant reliée, à une de ses extrémités, à un moyen (18-1, 18-2,...) de conversion de la lumière en signal électrique, les moyens d'émission et de conversion de la lumière étant situés d'un même côté par rapport au support.

8. Appareil selon la revendication 7, caractérisé en outre en ce que les extrémités libres des fibres dépassent du support, du côté opposé à celui où sont situés les moyens d'émission et de conversion de la lumière, d'une distance h, inférieure à la profondeur des alvéoles à mesurer.

9. Appareil selon la revendication 7, caractérisé en ce que, du côté du support opposé à celui où sont situés les moyens d'émission et de réception de la lumière, les extrémités des fibres affleurent à la surface du support.

10. Appareil selon la revendication 9, caractérisé en outre en ce que le support comprend des pions de centrage du support dans des alvéoles du nid d'abeilles à contrôler.

11. Appareil selon l'une des revendications 7 à 10, caractérisé en ce qu'il comprend en outre des moyens pour déplacer le support par rapport au nid d'abeilles à contrôler.

## Patentansprüche

1. Verfahren zur Kontrolle der Verbindung einer Wabenkonstruktion, die aus einer Matrix paralleler Zellen gebildet ist, auf einem Träger,
**dadurch gekennzeichnet,**
daß die folgenden Schritte ausgeführt werden:
- Einführen einer optischen Faser (10), die Beleuchtungsfaser genannt wird und die mit Lichtausstrahlmitteln (16) verbunden ist, in eine Zelle der Waben kombination,
- Einführen einer optischen Meßfaser, (12-1, 12-2,...), die mit Mitteln (18-1, 18-2,...) zur Umsetzung von Licht in ein elektrisches Signal verbunden ist, in wenigstens eine Zelle die an die zuvor genannte Zelle angrenzt,
- Ausstrahlen mittels der Beleuchtungsfaser (10) eines Beleuchtungsstrahls in die Zelle, in der die Beleuchtungsfaser eingeführt ist, und
- gleichzeitiges Erfassen des Lichts, das durch den Beleuchtungsstrahl in die angrenzende(n) Zelle(n) eingeführt wird, die eine Beobachtungsfaser enthält.

2. Verfahren nach Anspruch 1,
**dadurch gekennzeichnet,**
daß das Licht des Beleuchtungsstrahls ein durch eine Diode ausgestrahltes Infrarotlicht ist.

3. Verfahren nach einem der Ansprüche 1 oder 2,
**dadurch gekennzeichnet,**
daß jede optische Meßfaser mit einer Photodiode verbunden ist.

4. Verfahren zur Kontrolle der Verbindung einer Wabenkonstruktion, die aus einer Matrix paralleler Zellen gebildet wird, auf einem Träger,
**dadurch gekennzeichnet,**
daß die folgenden Schritte ausgeführt werden:
- Positionieren in der Nähe der Öffnung einer Zelle eines Endes einer optischen Faser (40), die Beleuchtungsfaser genannt wird, und die mit Lichtausstrahlmitteln verbunden ist,
- Positionieren in der Nähe der Öffnung wenigstens einer an die zuvor genannte Zelle angrenzenden Zelle wenigstens einer optischen Faser (42-1, 42-2,...) die Beobachtungsfaser genannt wird, so daß sich ihr Ende in der Nähe der entsprechenden Zelle befindet, wobei jede Beobachtungsfaser mit Mitteln zur Umsetzung eines Lichtsignals in ein elektrisches Signal verbunden ist,
- Ausstrahlen mittels der Beleuchtungsfaser (40) eines Beleuchtungsstrahls in eine Zelle in der Nähe der Zelle, in der die Beleuchtungsfaser positioniert ist,
- gleichzeitiges Erfassen des Lichts, das durch den zuvor genannten Beleuchtungs strahl in die angrenzende(n) Zelle(n) der Zelle eingeführt wird, in deren Nähe die Beleuchtungsfaser positioniert ist.

5. Verfahren nach Anspruch 4,
**dadurch gekennzeichnet,**
daß das Licht des Beleuchtungsstrahls ein durch eine Diode ausgestrahltes Infrarotlicht ist.

6. Verfahren nach einem der Ansprüche 4 oder 5,
**dadurch gekennzeichnet,**
daß jede optische Meßfaser mit einer Photodiode verbunden ist.

7. Vorrichtung zur Ausführung des Verfahrens nach einem der vorhergehenden Ansprüche,
**dadurch gekennzeichnet,**
daß es einen Träger (14, 44) aufweist, durch den wenigstens zwei optische Fasern hindurchgehen, wobei wenigstens eine dieser Fasern (10, 40) an einem ihrer Enden mit Mitteln (16) zur Ausstrahlung von Licht verbunden ist, wobei jede andere Faser (12-1, 12-2,...;42-1, 42-2,...), die Beobachtungsfaser genannt wird, an einem ihrer Enden mit einer Einrichtung (18-1, 18-2,...) zur Umsetzung eines Lichtsignals in ein elektrisches Signal verbunden sind, wobei die Mittel zur Ausstrahlung und zur Umsetzung des Lichts auf der gleichen Seite des Trägers liegen.

8. Vorrichtung nach Anspruch 7,
**dadurch gekennzeichnet,**
daß weiterhin die freien Enden der Fasern an der Seite, die der Seite gegenüberliegt, an der die Mittel zur Ausstrahlung und zur Umsetzung des Lichts angeordnet sind, über den Träger mit einem Abstand h überstehen, der geringer ist als die Tiefe der zu messenden Zellen.

9. Vorrichtung nach Anspruch 7,
**dadurch gekennzeichnet,**
daß auf der Seite des Trägers, die der Seite gegenüberliegt, an der sich die Mittel zur Ausstrahlung und zum Empfang des Lichtes befinden, die freien Enden mit der Oberfläche des Trägers bündig sind.

10. Vorrichtung nach Anspruch 9,
**dadurch gekennzeichnet,**
daß der Träger weiterhin Zapfen zur Zentrierung des Trägers in den Zellen der zu kontrollierenden Wabenkonstruktion aufweist.

11. Vorrichtung nach einem der Ansprüche 7 bis 10,
**dadurch gekennzeichnet,**
daß er weiterhin Mittel zur Verschiebung des Trägers bezüglich der zu kontrollierenden Wabenkonstruktion aufweist.

## Claims

1. A method of inspecting the connection between a support and a honeycomb consisting of a network of parallel cells, characterised in that it comprises:
introducing an optical fibre (10), referred to as an illuminating fibre, into a cell of the honeycomb structure, such fibre being connected to light-emitting means;
introducing into at least one cell adjacent the previous cell an optical measuring fibre (12-1, 12-2 ...) connected to means (18-1, 18-2 ...) for converting light into an electrical signal;
transmitting through the illuminating fibre (10) a beam illuminating the cell into which the illuminating fibre is introduced, and
synchronously detecting the light induced by the previous illuminating beam in the or each adjacent cell containing an observation fibre.

2. A method according to claim 1, characterised in that the light of the illuminating beam is an infrared light emitted by a diode.

3. A method according to claim 1 or claim 2, characterised in that every optical measuring fibre is connected to a photodiode.

4. A method of inspecting the connection between a support and a honeycomb structure consisting of a network of parallel cells, characterised in that it comprises:
positioning near the opening of a cell the end of optical fibre (40) referred to as the illuminating fibre and connected to light-emitting means;
positioning near the opening of at least one cell adjacent the previous cell at least one optical fibre (42-1, 42-2, ...), referred to as the observation fibre so that its end is near the corresponding cell, each observation fibre being connected to means for converting a light signal into an electrical signal;
transmitting through the illuminating fibre (40) a beam illuminating the cell near which the illuminating fibre is positioned, and
synchronously detecting the light induced by the previous illuminating beam in the or each cell adjacent the cell near which the illuminating fibre is positioned.

5. A method according to claim 4, characterised in that the light of the illuminating beam is an infrared light emitted by a diode.

6. A method according to claim 4 or claim 5, characterised in that each optical measuring fibre is connected to a photodiode.

7. Apparatus for the practice of the method according to any of the previous claims, characterised in that it comprises a support (14, 44) through which at least two optical fibres extend, at least one of such fibres (10, 40) being connected at one of its ends to light-emitting means (16), each of the other fibres (12-1, 12-2, ...; 42-1, 42-2, ...), referred to as observation fibres, being connected at one of its ends to means (18-1, 18-2, ...) for converting the light into an electrical signal, the light-emitting and light-converting means being disposed on the same side relatively to the support.

8. An apparatus according to claim 7, also characterised in that the free ends of the fibres extend beyond the support on the side remote from the side where the light-emitting and light-converting means are disposed by a distance h less than the depth of the cells to be measured.

9. An apparatus according to claim 7, characterised in that, on that side of the support which is remote from the side where the light-transmitting and light-receiving means are disposed, the fibre ends are flush with the support surface.

10. An apparatus according to claim 9, also characterised in that the support comprises pins or the like for centring the support in cells of the honeycomb network to be inspected.

11. An apparatus according to any of claims 7 to 10, characterised in that it also comprises means for moving the support relatively to the honeycomb network to be inspected.
